Europäisches Patentamt

European Patent Office

Office européen des brevets

(19)

(11) Veröffentlichungsnummer: **0 214 498**
**B1**

(12) **EUROPÄISCHE PATENTSCHRIFT**

(45) Veröffentlichungstag der Patentschrift:
24.05.89

(51) Int. Cl.⁴: **B30B 15/14**

(21) Anmeldenummer: 86111314.0

(22) Anmeldetag: 16.08.86

(54) Mechanische Presse, insbesondere Kniehebelpresse.

(30) Priorität: 04.09.85 DE 3531526

(43) Veröffentlichungstag der Anmeldung:
18.03.87 Patentblatt 87/12

(45) Bekanntmachung des Hinweises auf die Patenterteilung:
24.05.89 Patentblatt 89/21

(84) Benannte Vertragsstaaten:
CH DE FR GB IT LI SE

(56) Entgegenhaltungen:
DE-A- 1 774 674
DE-B- 2 003 171
DE-B- 2 065 816
US-A- 4 481 768

(73) Patentinhaber: Theodor Gräbener Pressensysteme
GmbH & Co. KG, Wetzlarer Strasse 1,
D-5902 Netphen 4(DE)

(72) Erfinder: Klein, Theodor, Am Vogelsang 15,
D-5909 Burbach(DE)

(74) Vertreter: Müller, Gerd et al, Patentanwälte
HEMMERICH-MÜLLER-GROSSE-POLLMEIER-MEY
Hammerstrasse 2, D-5900 Siegen 1(DE)

**Beschreibung**

Die Erfindung betrifft eine mechanische Presse, insbesondere Kniehebelpresse, bei der zwischen die kraftaufnehmenden und -übertragenden Teile, wie Kniehebel, Schlitten und Tisch ein Hydraulikglied eingeschaltet ist, dessen Druckraum ein Druckkissen bildet, das dauernd mit einem hydropneumatischen Druckerzeugungs- und/oder -erhaltungssystem in Verbindung steht, welches einen an das Druckkissen angeschlossenen Flüssigkeitsspeicher aufweist, der wiederum unter Gasdruck gehalten ist, wobei der Soll-Hydraulikdruck im Flüssigkeitsspeicher ständig durch den auf die jeweilige Preßkraft abstimmbaren Gasdruck vorgegeben ist. Eine mechanische Presse dieser Art, die einerseits mit einem mechanischen Oberstößelantrieb und andererseits einem hiervon unabhängigen mechanischen Unterstößelantrieb arbeitet, ist durch die DE-B 2 065 816 bekannt. Hierbei arbeitet das hydraulische Zwischenglied mit dem hydropneumatischen Druckerzeugungs- und/oder -erhaltungssystem in der Weise als Überlastsicherung zusammen, daß bei der Endpreßkraft des Unterstößelantriebes die Belastung des Oberstößelantriebes nicht größer ist, als die von der Endpreßkraft des Oberstößelantriebes hervorgerufene Belastung war. Da aus praktischen Gründen eine Gleichheit nicht erreichbar ist, wird die Entlastung des Oberstößelantriebes so durchgeführt, daß die Belastung desselben bei der Endpreßkraft des Unterstößelantriebs kleiner ist als vorher, also bei der Belastung des Oberstößels allein. Daher wird der Ansprechdruck des Druckkissens auf einen kleineren Wert eingestellt, wenn die mittelbar in den Belastungswert des Oberstößelantriebs eingehende Belastung des Unterstößelantriebs möglichst genau abgesichert werden soll.

Bei der bekannten Auslegung einer mechanischen Presse kann jedoch eine vorgegebene Preßkraft nicht gleichbleibend während ihres gesamten Arbeitszyklus aufrechterhalten werden.

Auch durch die DE-OS 27 32 278 ist bereits eine mechanische Presse bekannt, bei der im Kraftfluß von Pleuel, Stößel und Tisch ein hydraulisches Zwischenglied vorgesehen ist, dessen Druck bei Überlastung in der unteren Totpunktlage durch Öffnen eines Ventils aufgehoben werden kann.

Dabei ist das druckabhängig gesteuerte Ventil am hydraulischen Zwischenglied als elektrisch steuerbares Ventil ausgelegt, welches über eine Steuereinrichtung mit mindestens einem elektrischen Meßwertgeber in Verbindung steht, der so angeordnet ist, daß er auf einen vorgegebenen Spannungswert an einem der Bauelemente im Kraftfluß anspricht.

Durch diese Ausgestaltung der bekannten Presse wird zwar erreicht, daß die kraftaufnehmenden und -übertragenden Bauteile die gleiche Starrheit bei kleinen und bei großen Preßkräften aufweisen, weil ständig der gleiche Vorspanndruck im Hydrauliksystem konstant eingehalten werden kann. Da jedoch beim Überschreiten einer voreingestellten Überlast das elektrisch steuerbare Ventil öffnet und die Arbeitsflüssigkeit drucklos aus dem Hydraulikglied abfließen läßt, wird der Arbeitszyklus der Presse unterbrochen und damit einem Festfahren oder einer Überlastung derselben im unteren Totpunkt entgegengewirkt.

In vielen Fällen, beispielsweise beim Betrieb von Kalibrierpressen für vorgefertigte, insbesondere im Sinterverfahren hergestellte Werkstücke, ist es erwünscht oder sogar Bedingung, daß diese einer genau vorgegebenen Preßkraft unterworfen werden können, unabhängig von ihrer aus der Vorfertigung resultierender, innerhalb gewisser Grenzen unterschiedlicher Höhenabmessung.

Diese Bearbeitungsweise der Werkstücke beim Kalibriervorgang ist Voraussetzung dafür, daß der sogenannte Spring-Back-Effekt unterbunden, zumindest innerhalb bestimmter Grenzen gehalten wird. Der Spring-Back-Effekt würde in unerwünschter Weise dazu führen, daß die im Kalibrierwerkzeug vorgegebenen Abmessungen an den Kalibrierflächen nicht gewährleistet sind.

Wesentlich bei einem solchen Kalibriervorgang ist dabei, daß der Arbeitszyklus der Presse unter Aufrechterhaltung der jeweils vorgegebenen Preßkraft auch dann vollständig abläuft, wenn die Ausgangsabmessungen des zu kalibrierenden Werkstücks ihr an sich bei der Vorfertigung angestrebtes Höhensollmaß überschreiten.

Ausgehend von einer mechanischen Presse, insbesondere Kniehebelpresse der eingangs spezifizierten Gattung wird dieses Ziel erfindungsgemäß durch das Kennzeichnungsmerkmal des Anspruchs 1, nämlich dadurch erreicht, daß im hydropneumatischen Druckerzeugungs- und/oder -erhaltungssystem das Volumen des Flüssigkeitsspeichers relativ zum Maximalvolumen des Druckkissens im Hydraulikglied eine Bemessung hat, bei der der im Flüssigkeitsspeicher vorgegebene Soll-Hydraulikdruck durch Flüssigkeits-Rückströmung aus dem Hydraulikglied im unteren Totpunkt des Preßhubes veränderbar ist, und daß dabei das Druckkissen im Hydraulikglied mit dem Flüssigkeitsspeicher eine gegen den Gasdruck höchstens um 1% ausweichbare hydraulische Feder bildet.

Vorteilhaft bei einer derartigen Auslegung einer mechanischen Presse ist, daß das als hydraulische Feder wirkende Druckkissen nicht geschaltet wird, sondern lediglich ausweicht, sofern während einer Arbeitszyklus der Presse höchstens höhere als die voreingestellten Preßkräfte auftreten.

Auf diese Art und Weise ist gewährleistet, daß während des gesamten Arbeitszyklus der Presse ständig die vorgegebene Preß kraft aufrechterhalten wird, auch wenn die zu bearbeitenden Werkstücke ein das vorgegebene Sollmaß überschreitendes Ausgangsmaß haben.

Eine vorteilhafte Weiterbildung liegt nach der erfindungsgemäßen Presse nach Anspruch 2 darin, daß mit dem hydropneumatischen Druckerzeugungs- und/oder -erhaltungssystem über den am Flüssigkeitsspeicher anstehenden Gasdruck der Arbeitsdruck im Hydraulikglied variierbar ist und dadurch die Preßkraft innerhalb weiter Grenzen feinfühlig vorgegeben werden kann.

Ein anderes wesentliches Weiterbildungsmerkmal der Erfindung wird auch darin gesehen, daß nach Anspruch 3 der Flüssigkeitsdruck im Hydraulikglied auf einen Rechner schaltbar und dabei über diesen der jeweils zugehörige Gasdruck bestimmbar ist, welcher am Flüssigkeitsspeicher ansteht.

Bewährt hat sich bei einer erfindungsgemäßen Presse eine Ausgestaltung, bei der gemäß Anspruch 4 dem Hydraulikglied mehrere Drucksensoren für unterschiedliche Wirkdrücke zugeordnet und diese wahlweise auf den Rechner schaltbar sind, so daß die jeweils zugehörigen Gasdrücke schnell und exakt am Flüssigkeitsspeicher anstehen.

Nach der Erfindung hat sich ein Aufbau als besonders zweckmäßig herausgestellt, bei dem entsprechend den Merkmalen des Anspruchs 5 der Gasdruck im Flüssigkeitsspeicher in einer Gasblase ansteht und über eine Gaspumpe veränderbar ist, die mit einer Gasflasche in Verbindung steht.

Eine optimale Betriebsweise der Presse läßt sich erreichen, wenn nach Anspruch 6 der Flüssigkeitsspeicher über eine Zahnradpumpe und eine Kolbenpumpe mit Arbeitsflüssigkeit beschickbar ist, wobei die Zahnradpumpe für Förderung bei Solldruckänderung und die Kolbenpumpe für Förderung zur Solldruck-Haltung eingerichtet ist.

Ebenso wichtig ist in diesem Zusammenhang, daß gemäß Anspruch 7 die Gaspumpe aus einem einseitig zeitweilig mit der Gasflasche verbindbaren Kolbenspeicher besteht, in dessen beiden Endstellungen je ein Endschalter betätigbar ist, daß beide Endschalter einem Ventil zugeordnet sind, über das die Zahnradpumpe zeitweilig mit der anderen Seite des Kolbenspeichers in Förderverbindung bringbar ist.

Schließlich hat es sich nach der Erfindung aber auch als wichtig erwiesen, daß die Gaspumpe gasseitig wahlweise entweder mit der Gasflasche oder der Gasblase des Flüssigkeitsspeichers verbindbar ist, so daß das Druckgas praktisch verlustlos je nach Bedarf in einem geschlossenen System hin und her verlagert werden kann.

Wenn im Zusammenhang mit der erfindungsgemäßen Presse von einem zwischen die kraftaufnehmenden und -übertragenden Bauteile eingeschalteten Hydraulikglied die Rede ist, dann braucht dieses selbstverständlich nicht aus einer einzigen Baueinheit zu bestehen. Vielmehr kann es ohne weiteres auch von einer größeren Anzahl gleichartiger, parallel geschalteter Baueinheiten gebildet werden.

Während es bei der Presse nach DE-OS 27 32 278 darauf ankommt, während des Arbeitszyklus der Presse das Auffedern der kraftaufnehmenden und -übertragenden Bauteile zu unterbinden, zielt die erfindungsgemäße Ausgestaltung geradezu darauf ab, ein für unterschiedliche Bearbeitungsfälle genau definierbares Auffedern dieses Systems zu gewährleisten, ohne daß hierdurch ein Festfahren der Presse in ihrem unteren Totpunkt vorkommen kann.

Weitere Merkmale und Vorteile werden nachfolgend anhand eines in der Zeichnung dargestellten Ausführungsbeispieles ausführlich erläutert. Hierbei zeigen

Fig. 1 in schematisch vereinfachter Prinzipdarstellung eine als Kniehebelpresse aufgebaute mechanische Presse mit einem zwischen die kraftaufnehmenden und/oder kraftübertragenden Bauteile eingeschaltetem Druckkissen und

Fig. 2 das dem Hydraulikglied zugeordnete System zur Vorgabe und Konstanthaltung seines Wirkdruckes.

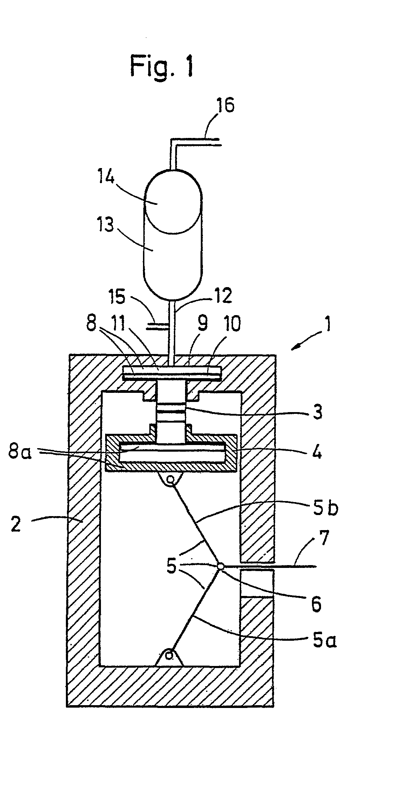

Die in Fig. 1 dargestellte mechanische Presse 1 hat einen Pressenrahmen 2 mit daran abgestütztem Pressentisch 3 sowie einem relativ dazu im Pressenrahmen 2 heb- und senkbar geführten Schlitten 4.

Der Schlitten 4 wird dabei im Pressenrahmen 2 durch einen Kniehebel 5 bewegt, dessen eines Glied 5a am Rahmen 2 und dessen anderes Glied 5b am Schlitten 4 angreift, während auf sein Kniegelenk 6 der Pressenantrieb 7 angreift, welcher den Kniehebel 5 zwischen seiner Knicklage und seiner Strecklage hin- und herbewegt.

Im Pressenrahmen 2 ist ein Hydraulikglied 8 untergebracht, das aus einem ortsfesten Zylinder 9 und einem darin verschiebbar geführten Plungerkolben 10 besteht, wobei der Plungerkolben 10 den Träger des Pressentisches 3 bildet.

An seiner dem Pressentisch 3 abgewendeten Seite wird der Plungerkolben 10 des Hydraulikgliedes 8 von einem hydraulischen Druckkissen 11 abgestützt, das im Zylinder 9 aufgebaut ist und über eine Druckleitung 12 dauernd mit einem großvolumigen Flüssigkeitsspeicher 13 in Strömungsverbindung steht.

Im Flüssigkeitsspeicher 13 ist dabei eine Gasblase 14 untergebracht, die unter einem auf die jeweilige Preßkraft abgestimmten Gasdruck gehalten wird und dadurch druckerzeugend auf die im Flüssigkeitsspeicher 13 der Druckleitung 12 und dem Zylinder 9 enthaltene Flüssigkeit einwirkt.

Das Füllvolumen des Flüssigkeitsspeichers 13 und auch der Gasblase 14 in diesem ist so auf das Volumen des Druckkissens 11 zwischen dem Plungerkolben 10 und dem Zylinder 9 des Hydraulikgliedes 8 abgestimmt, das sich beim Durchlaufen des maximalen Arbeitsweges des Plungerkolbens nur eine Vergrößerung des Füllvolumens im Flüssigkeitsspeicher 13 gegen die Gasblase 14 einstellen kann, die einer Druckerhöhung in der Gasblase 14 kleiner als 1% entspricht.

Der großvolumige Flüssigkeitsspeicher 13 kann über eine Leitung 15 an eine Flüssigkeits-Lieferquelle angeschlossen werden, während die Gasblase 14 durch eine Druckleitung 16 mit einer Druckgas-Lieferquelle verbindbar ist.

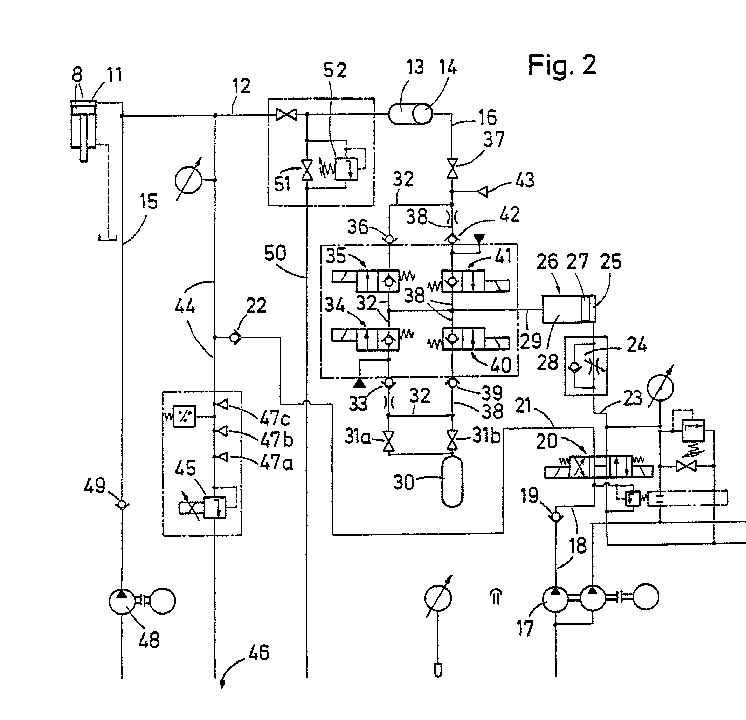

Das zur Presse 1 nach Fig. 1 gehörende Druckerzeugungs- und/oder Druckerhaltungssystem ist in Fig. 2 der Zeichnung dargestellt. Dabei sind in Fig. 2 auch das Hydraulikglied 8, bestehend aus Zylinder 9, Plungerkolben 10 und Druckkissen 11, sowie der großvolumige Flüssigkeitsspeicher 13 mit eingebauter Gasblase 14 dargestellt.

Das Druckerzeugungs- und/oder Druckerhaltungssystem nach Fig. 2 ist mit einer Zahnradpumpe 17 ausgestattet, die beispielsweise eine Förderleistung von etwa 10 l/min hat und in deren Druckleitung 18 ein Rückschlagventil 19 angeordnet ist.

Über ein Wegeventil 20 kann die Druckleitung 18 entweder auf eine Leitung 21 geschaltet werden, die über ein Rückschlagventil 22 in die Druckleitung 12 fördert. Andererseits kann sie über dieses Wegeventil 20 aber auch auf eine Leitung 23 geschaltet werden, die über ein Rückschlag-Drosselventil an einen Zylinderraum 25 eines Zylinders 26 angeschlossen ist, in dem ein Kolben 27 arbeitet, der andererseits auf einen Zylinderraum 28 im Zylinder 26 einwirkt.

In den Zylinderraum 28 des Zylinders 26 mündet dabei eine Leitung 29, durch welche Stickstoffgas aus einer Druckflasche 30 in den Zylinderraum 28 zugeführt werden kann. Zu diesem Zweck steht die Druckflasche 30 über ein Absperrventil 31 mit einer Leitung 32 in Verbindung, die ein Rückschlagventil 33 enthält, dem zwei Sitzventile 34 und 35 nachgeordnet sind, die im Abstand hintereinander liegen. Zwischen den beiden Sitzventilen 34 und 35 zweigt von der Leitung 32 die Leitung 29 ab, welche mit dem Zylinderraum 28 in Dauerverbindung steht.

Hinter dem Sitzventil 35 enthält die Leitung 32 wiederum ein Rückschlagventil 36, welches eine dem Rückschlagventil 33 entsprechende Wirkrichtung hat.

Hinter dem Rückschlagventil 36 mündet die Leitung 32 in die Leitung 16, welche mit der Gasblase 14 innerhalb des Flüssigkeitsspeichers 13 unter Zwischenschaltung eines Absperrventils 37 verbunden ist.

Mit dem Absperrventil 31 für die Druckflasche 30 steht aber noch eine weitere Leitung 38 in Verbindung, die ein Rückschlagventil 39 enthält, welches entgegengesetzt zum Rückschlagventil 33 in der Leitung 32 arbeitet. Dem Rückschlagventil 39 sind die beiden Sitzventile 40 und 41 nachgeordnet, zwischen denen sich an die Leitung 38 die Leitung 29 anschließt, welche ständig mit dem Zylinderraum 28 des Zylinders 26 verbunden ist. Hinter dem Sitzventil 41 ist in der Leitung 38 ein Rückschlagventil 42 vorgesehen, das eine zum Rückschlagventil 36 in der Leitung 32 entgegengesetzte Wirkrichtung hat. Hinter dem Rückschlagventil 42 geht auch die Leitung 38 in die Leitung 16 über, in der sich vor dem Absperrventil 37 ein Drucksensor 43 befindet, der auf den Gasdruck in der Leitung 16 bzw. in der Gasblase 14 ansprechen kann.

Während es durch die Leitung 32 über die Sitzventile 34 und 35 möglich ist, gleichzeitig oder auch nacheinander den Zylinderraum 28 des Zylinders 26 sowie die Gasblase 14 im Flüssigkeitsspeicher 13 mit Stickstoffgas zu beschicken und zugleich das Rückströmen desselben in die Druckflasche 30 durch die Rückschlagventile 33 und 36 zu unterbinden, kann die Leitung 38 mit den Sitzventilen 40 und 41 genutzt werden, um das Stickstoffgas aus dem Zylinderraum 28 und der Gasblase 14 in die Druckflasche 30 zurückzuführen, während sie in Gegenrichtung durch die Rückschlagventile 39 und 42 auch bei geöffneten Sitzventilen 40 und 41 abgesperrt ist.

Die Leitung 21 steht hinter dem Rückschlagventil 22 mit einer Leitung 44 in Verbindung, in der nach einem Flüssigkeitsreservoir 46 hin ein Druckregelventil 45 wirksam ist, während sie andererseits an die Druckleitung 12 angeschlossen ist, welche vom Flüssigkeitsspeicher 13 zum Hydraulikglied 8 führt.

An die Leitung 44 sind zwischen dem Druckregelventil 45 und der Leitung 12 mehrere, beispielsweise drei, Drucksensoren 47a, 47b und 47c angeschlossen, von denen jeder für ein anderes Druckniveau empfindlich ist und von denen jeder für sich in einen geschlossenen Regelkreis mit dem Druckregelventil 45 schaltbar ist.

Entsprechend dem jeweils wirksamen Drucksensor 47a, 47b, 47c kann dann das Druckniveau der Flüssigkeit in der Druckleitung 12 und selbstverständlich auch im Flüssigkeitsspeicher 13 und im Druckkissen 11 des Hydraulikgliedes 8 konstant auf dem vorgegebenen Wert gehalten werden.

Parallel zur Leitung 44 steht mit der Leitung 12 nicht nur die über eine Kolbenpumpe 48 und ein Rückschlagventil 49 beaufschlagte Leitung 15 in Verbindung, sondern auch noch eine Leitung 50. Dabei sind in die Leitung 50 ein Absperrventil 51 und parallel dazu und unter Umgehung desselben ein Überdruckventil 52 eingeschaltet, welches anspricht, sofern der höchste am Druckregelventil 45 einstellbare Flüssigkeitsdruck um etwa 10% überschritten wird. Wenn beispielsweise der höchste Ansprechdruck des Druckregelventils 45 bei 255 bar liegt, dann ist das Überdruckventil 52 also etwa auf einen Druck von 280 bar eingestellt.

Während die Druckleitung 18 der Zahnradpumpe 17 über das Wegeventil 20 in verschiedener Weise zu den Leitungen 21 und 23 geschaltet werden kann und daher Flüssigkeit aus dem Flüssigkeitsreservoir 46 über unterschiedliche Wege fördert, ist die Kolbenpumpe 48 lediglich in der Lage, Flüssigkeit aus dem Flüssigkeitsreservoir 46 über die Leitung 15 ständig in die Leitung 12 zwischen dem Flüssigkeitsspeicher 13 und dem Druckkissen 11 zu fördern. Es wird hierdurch sichergestellt, daß im Druckübertragungs- und/oder Druckhaltesystem zwischen dem Flüssigkeitsspeicher 13, der Druckleitung 12 und dem Druckkissen 11 ständig die Flüssigkeitsmenge verfügbar ist, die den ordnungsgemäßen Betrieb der mechanischen Presse 1 sicherstellt.

Der Drucksensor 43, welcher vor dem Absperrventil 37 mit der Gasleitung 16 zur Gasblase 14 in Verbindung steht, spricht auf jeden in dieser Leitung 16 herrschenden Gasdruck an, d.h., er nimmt diesen Gasdruck auf. Hingegen sind die Drucksensoren 47a, 47b und 47c in der Flüssigkeitsleitung 44 jeweils nur für einen ganz bestimmten vorgegebenen Druck empfindlich. Der Drucksensor 43 und der jeweils wirksame der Drucksensoren 47a, 47b, 47c arbeiten auf einen Rechner und zwar dergestalt, daß der dem jeweiligen Flüssigkeitsdruck in der Leitung 44 zugeordnete Gasdruck in der Leitung 16 selbsttätig und mit höchstmöglicher Genauigkeit eingehalten wird.

Dem Kolben 27 des Zylinders 26 ist sowohl am hinteren Ende des Flüssigkeitsraums 25 als auch am hinteren Ende des Gasraums 28 ein (nicht dargestellter Endschalter) zugeordnet, und zwar derart, daß beide Endschalter die Schaltstellung des Wegeventils 20 beeinflussen. In der Grundstellung des Wegeventils 20, wenn also keiner der beiden Endschalter betätigt ist, besteht eine Förderverbindung der Zahnradpumpe 17 sowohl mit der Leitung 21, als auch mit der Leitung 23.

Der im Flüssigkeitsraum 25 des Zylinders 26 vorgesehene Endschalter löst bei seiner Betätigung eine Schaltung des Wegeventils 20 aus seiner Ruhestellung in der Weise aus, daß die Leitung 21 von der Zahnradpumpe 17 getrennt und nur mit der Leitung 23 in Verbindung gehalten wird. Wird der Endschalter an der Gasseite des Zylinders 26 hingegen betätigt, dann wird das Wegeventil 20 aus der Mittelstellung so geschaltet, daß die Zahnradpumpe 17 lediglich auf die Leitung 21 fördert, während die Leitung 23 Flüssigkeit in das Flüssigkeitsreservoir 46 zurückführen kann.

Die Arbeitsweise des Druckerzeugungs- und Druckhaltesystems nach Fig. 2 in Verbindung mit der mechanischen Presse nach Fig. 1 ist folgende:

Zur Inbetriebnahme wird zunächst die Flüssigkeit, beispielsweise Hydrauliköl, in das System eingefüllt, so daß diese in allen flüssigkeitsführenden Systembereichen anschließt. Daraufhin wird Druckgas, z.B. Stickstoff, über das Absperrventil 31a aus der Druckflasche 30 in alle gasbeaufschlagten Systembereiche eingeführt, während über ein Vorwahlschalter der auf das mittlere Druckniveau der Flüssigkeit ansprechende Drucksensor 47b mit dem Druckregelventil 45 in den geschlossenen Regelkreis geschaltet wird. Dabei soll der Gasdruck in den von ihm beaufschlagten Systembereichen durch Öffnen der Sitzventile 34 und 35 auf ein Niveau gebracht werden, das etwa zwischen 60 und 66% vom Druckniveau liegt, welches der wirksame Drucksensor 47b in den mit der Flüssigkeit beaufschlagten Systembereichen aufrechterhält.

An einem Vorwahlschalter einer Elektronik-Steuerung wird der jeweilige Vorspanndruck für die Flüssigkeit, beispielsweise über einen Bereich zwischen 25 und 255 bar eingestellt, was etwa einer Preßkraft von 18 bis 180 Mp der mechanischen Presse 1 entspricht. Nach dem Einschalten der Elektroniksteuerung liest der Rechner ständig den, beispielsweise dreistellig, ausgelegten Vorwahlschalter für den Hydraulikdruck aus und berechnet den dazugehörigen Gasdruck. Der Multiplikator für die Berechnung des Gasdruckes ist dabei über einen DIL-Schalter in einem Bereich digital einstellbar, der beispielsweise zwischen 0,01 und 2,55 liegt.

Entsprechend dem digital vorgewählten Hydraulikdruck wird dann einer der drei Drucksensoren 47a, 47b und 47c ausgewählt und auf den Druckregelkreis mit dem Druckregelventil 45 durchgeschaltet.

Sobald von der Pressensteuerung das Startsignal kommt, wird der augenblickliche Gasdruck im Blasenspeicher 14 durch den Drucksensor 43 in den Rechner eingelesen und mit dem berechneten Gas-Solldruck verglichen.

Daraufhin werden dann die Sitzventile 34 und 35, gegebenenfalls aber auch die Sitzventile 40 und 41 so angesteuert, daß sich der gewünschte Soll-Gasdruck einstellen kann.

Muß der Soll-Gasdruck geändert werden, dann übernimmt der Rechner die Steuerung der Gaspumpe, die im Zylinder 26 vom Kolben 27 und dem Gasabteil 28 gebildet wird. Die Gaspumpe 26, 27, 28 wird über das Wegeventil 20 und die Zahnradpumpe 17 betätigt, d.h., der Rechner kann über das Wegeventil 20 die Flüssigkeitszufuhr in das Flüssigkeitsabteil 25 des Zylinders 26 beeinflussen, um dadurch den Kolben 27 zu verschieben und das Volumen des Gasanteils 28 zu verändern.

Nach jedem Pumpvorgang der Gaspumpe wird der aktuelle Gasdruck wiederum über den Drucksensor 43 in den Rechner eingelesen. Das Füllen bzw. Entleeren der Gasblase 14 im Flüssigkeitsspeicher 13 wird erst dann beendet, wenn der Soll-Gasdruck darin erreicht ist. Nach Erreichen dieses Soll-Gasdruckes werden alle Sitzventile 34, 35 bzw. 40, 41 gesperrt und anschließend das Druckregelventil 45 rampenförmig auf den Hydraulik-Solldruck eingestellt.

Mit dem Einfahren des Druckregelventils 45 wird dann der Flüssigkeitsspeicher 13 aufgefüllt, während der Rechner den Hydraulikdruck überwacht und erst dann ein Freigabesignal an die Maschinensteuerung durchschaltet, wenn der Hydraulik-Solldruck tatsächlich erreicht ist. Hiernach wird das Wegeventil 20 vom Rechner so geschaltet, daß nur noch die Kolbenpumpe 48 über die Leitung 15 in das Druckerzeugungs- und/oder Haltesystem fördert, und zwar mit einer genau definierten Flüssigkeitsmenge von beispielsweise 1,1 l/min.

Aufgrund der Tatsache, daß das Druckregelventil 45 mit dem jeweilig wirksamen Drucksensor 47a bzw. 47b bzw. 47c im geschlossenen Regelkreis arbeitet, wird der Hydraulikdruck im Flüssigkeitsspeicher 13 sehr konstant gehalten werden.

Falls mit einem anderen Vorspanndruck der Flüssigkeit gearbeitet werden soll, kann dieser am Vorwahlschalter schon während des Betriebes der Presse eingestellt werden. Erst mit einem nachfolgenden Betätigen der Start-Taste für den Pressenbetrieb wird dann der neue Vorgabewert in das System übernommen und der entsprechende Füll- bzw. Entleervorgang für die Gasblase 14 eingeleitet. Hierzu wird zunächst das Druckregelventil 45 auf 0 heruntergefahren, um den Flüssigkeitsspeicher soweit zu entleeren, daß er nur noch unter einem Restdruck von etwa 20 bar steht. Erst in diesem Zustand des Flüssigkeitsspeichers 13 kann der tatsächliche Gasvorspanndruck über den Drucksensor 43 eingelesen werden.

Zum Füllen der Gasblase 14 mit dem Stickstoffgas werden die Sitzventile 34 und 35 geöffnet, wobei der Gasdruck aus der Druckflasche 30 im Gasabteil 28 des Zylinders 26 den Kolben 27 in die rechte Endstellung drückt. Nun wird das Wegeventil 20 so angesteuert, daß Flüssigkeit von der Zahnradpumpe 17 in das Flüssigkeitsabteil 25 des Zylinders 26 gedrückt wird. Dadurch fährt der Kolben 27 nach links und drückt das im Gasabteil 28 befindliche Stickstoffgas durch das geöffnete Sitzventil 35 in die Gasblase 14 des Flüssigkeitsspeichers 13. Auch bei Erreichen der linken Endlage des Kolbens 27 im Gasabteil 28 wird der dort befindliche Endschalter betätigt, der dann das Wegeventil 20 abfallen läßt und bewirkt, daß der Kolben 27 unter dem auf das Gasabteil einwirkenden Gasdruck aus der Druckflasche 30 wieder in die rechte Endlage zurückkehrt, während die Flüssigkeit durch den Drosselteil des Drosselrückschlagventils 24 und die Leitung 23 wieder in das Flüssigkeitsreservoir 46 zurückläuft.

Der Pumpvorgang der Gaspumpe wiederholt sich solange, bis der Gasdruck in der Gasblase 14 auf etwa 75% des vorgewählten Gasdruckes angestiegen ist. Dieser Gasdruck wird dann vom Drucksensor 43 in den Rechner eingelesen.

Wenn die Gasblase 14 entleert werden soll, weil ein niedrigerer Einstellwert gewählt wurde, werden die Sitzventile 40 und 41 geschaltet. Der Arbeitsvorgang der Gaspumpe ist der gleiche, jedoch wird von ihr dabei das Stickstoffgas in die Druckflasche 30 zurückgedrückt.

Während des Betriebs der mechanischen Presse 1 kann Flüssigkeit aus dem Druckkissen 11 des Hydraulikgliedes 8 nur entweichen, wenn dabei der voreingestellte Soll-Hydraulikdruck überschritten wird. In diesem Augenblick wird dann die Flüssigkeit über die Leitung 12 in den durch die Gasblase 14 vorgespannten Flüssigkeitsspeicher 13 zurückgedrückt und der Kolben 10 kann sich im Zylinder 9 des Hydraulikgliedes 8 gegen den bestehenden Soll-Hydraulikdruck entsprechend verschieben. Das Volumen des Flüssigkeitsspeichers 13 ist relativ zum Maximalvolumen des Druckkissens 11 im Hydraulikglied 8 so bemessen, daß sich der Hydraulikdruck im System durch Rückströmen der Flüssigkeit in dem Flüssigkeitsspeicher 13 bestenfalls gegenüber dem vorgegebenen Soll-Hydraulikdruck um 1% ändern kann, während die mechanische Presse 1 ihren unteren Totpunkt durchläuft.

Die Besonderheit des vorstehend ausführlich erläuterten Druckerzeugungs- und/oder Erhaltungssystems liegt darin, daß das Druckkissen 11 im Hydraulikglied 8 gewissermaßen wie eine hydraulische Feder wirkt, weil es nicht geschaltet wird, sondern lediglich gegen einen vorgegebenen Gas-Vorspanndruck ausweicht, wenn während eines Arbeitszyklus der Presse eine höhere als die am Hydraulikglied 8 eingestellte Preßkraft auftritt.

In Fig. 1 der Zeichnung ist noch angedeutet, daß auch der Schlitten 4 der mechanischen Presse 1 gegebenenfalls mit einem Hydraulikglied 8a ausgestattet werden kann.

Eine mechanische Presse 1 kann daher entweder das Hydraulikglied 8 oder das Hydraulikglied 8a aufweisen. Sie kann aber auch mit beiden Hydraulikgliedern 8 und 8a ausgerüstet werden, wobei dann jedes derselben mit einem eigenen Druckerzeugungs-und/oder Druckhaltesystem entsprechend der Fig. 2 zusammenarbeitet.

Bei einer mechanischen Presse 1, insbesondere einer Kniehebelpresse, ist zwischen Kniehebel 5, Schlitten 4 und Tisch 3 ein Hydraulikglied 8 eingeschaltet, in dessen Druckraum 9 ein Druckkissen 11 ausgebildet ist.

Dieses Druckkissen 11 steht dauernd mit einem großvolumigen Flüssigkeitsspeicher 13 in Strömungsverbindung 12. Der Flüssigkeitsspeicher 13 wird wiederum unter einem auf die jeweilige Preßkraft abgestimmten Gasdruck 14 gehalten. Das Druckkissen 11 hat die Wirkung einer hydraulischen Feder, die nicht ge schaltet wird, sondern lediglich ausweicht, sofern während eines Arbeitszyklus der Presse 1 höhere als die voreingestellten Preßkräfte auftreten (Fig. 1).

## Patentansprüche

1. Mechanische Presse (1), insbesondere Kniehebelpresse, bei der zwischen die kraftaufnehmenden und -übertragenden Teile (3, 4, 5), wie Kniehebel (5), Schlitten (4) und Tisch (3), ein Hydraulikglied (8) eingeschaltet ist, dessen Druckraum (9) ein Druckkissen (11) bildet, das dauernd mit einem hydropneumatischen Druckerzeugungs- und/oder -erhaltungssystem in Verbindung steht, welches einen an das Druckkissen (11) angeschlossenen Flüssigkeitsspeicher (13) aufweist, der wiederum unter Gasdruck (14) gehalten ist, wobei der Soll-Hydraulikdruck im Flüssigkeitsspeicher (13) ständig durch den auf die jeweilige Preßkraft abstimmbaren Gasdruck (14) vorgegeben ist, dadurch gekennzeichnet, daß im hydropneumatischen Druckzeugungs-und/oder -erhaltungssystem das Volumen des Flüssigkeitsspeichers (13) relativ zum Maximalvolumen des Durckkissens (11) im Hydraulikglied (8) eine Bemessung hat, bei welcher der im Flüssigkeitsspeicher (13) vorgegebene Soll-Hydraulikdruck durch Flüssigkeits-Rückströmung aus dem Hydraulikglied (8) im unteren Totpunkt des Preßhubes veränderbar ist, und daß dabei das Druckkissen (11) im Hydraulikglied (8) mit dem Flüssigkeitsspeicher (13) eine gegen den Gasdruck (14) um höchsten 1% ausweichbare hydraulische Feder bildet.

2. Mechanische Presse nach Anspruch 1, dadurch gekennzeichnet, daß mit dem hydropneumatischen Druckerzeugungs- und/oder -erhaltungssystem über den am Flüssigkeitsspeicher (13) anstehenden Gasdruck (14) der Arbeitsdruck im Hydraulikglied (8) variierbar ist (43; 47a, 47b, 47c).

3. Mechanische Presse nach einem der Ansprüche 1 und 2, dadurch gekennzeichnet, daß der Flüssigkeitsdruck im Hydraulikglied (8) auf einen Rechner schaltbar (47a, 47b, 47c) und über diesen der jeweils zugehörige Gasdruck (14) bestimmbar ist (43), welcher am Flüssigkeitsspeicher (13) ansteht.

4. Mechanische Presse nach einem der Ansprüche 1 bis 3, dadurch gekennzeichnet, daß dem Hydraulikglied (8) mehrere Drucksensoren (47a, 47b, 47c) für unterschiedliche Wirkdrücke zugeordnet und diese wahlweise auf den Rechner schaltbar sind.

5. Mechanische Presse nach einem der Ansprüche 1 bis 4, dadurch gekennzeichnet, daß der Gasdruck im Flüssigkeitsspeicher (13) in einer Gasblase (14) ansteht und über eine Gaspumpe (26, 27, 28) veränderbar ist, welche mit einer Druckgasflasche (30) in Verbindung (29 und 32 bis 34) steht.

6. Mechanische Presse nach einem der Ansprüche 1 bis 5, dadurch gekennzeichnet, daß der Flüssigkeitsspeicher (13) des hydropneumatischen Druckerzeugungs- und/oder -erhaltungssystems über eine Zahnradpumpe (17) und eine Kolbenpumpe (48) mit Arbeitsflüssigkeit beschickbar ist, wobei die Zahnradpumpe (17) für Förderung bei Solldruckänderung die Kolbenpumpe (48) für Förderung zur Solldruck-Haltung eingerichtet ist.

7. Mechanische Presse nach einem der Ansprüche 1 bis 6, dadurch gekennzeichnet, daß die Gaspumpe (26, 27, 28) aus einem einseitig (28) zeitweilig mit der Gasflasche (30) verbindbaren Kolbenspeicher (25 bis 28) besteht, in dessen beiden Endstellungen je ein Endschalter betätigbar ist, daß beide Endschalter einem Wegeventil (20) zugeordnet sind, über das die Zahnradpumpe (17) zweitweilig mit der anderen Seite (25) des Kolbenspeichers (25 bis 28) zum Betrieb der Gaspumpe (26, 27, 28) in Förderverbindung bringbar ist.

8. Mechanische Presse nach einem der Ansprüche 1 bis 7, dadurch gekennzeichnet, daß die Gaspumpe (25 bis 28) gasseitig (28) wahlweise entweder mit der Druckgasflasche (30) oder mit der Gasblase (14) des Flüssigkeitsspeichers (13) verbindbar ist (40, 41 bzw. 34, 35).

## Claims

1. Mechanical press (1), more especially a toggle-lever press, in which a hydraulic member (3) is connected between the force-receiving and force-transmitting parts (3, 4, 5), such as toggle-lever (5), slide (4) and table (3), the pressure chamber (9) of said member forming a pressure cushion or pad (11) which is permanently connected to a hydropneumatic pressure-producing and/or pressure-maintaining system, which comprises a liquid store (13) connected to the pressure cushion (11), which store, in its turn, is maintained under gas pressure (14), the required hydraulic pressure in the liquid accumulator (13) being constantly prescribed by the gas pressure (14) which can be matched to the pressurising force at the time, characterised in that the volume of the liquid accumulator (13) in the hydropneumatic pressure-generating and/or maintaining system has a dimension, relatively to the maximum volume of the pressure cushion (11) in the hydraulic member (8), at which the theoretical hydraulic pressure prescribed in the liquid store (13) is variable by return flow of liquid from the hydraulic member (8) in the lower deadcentre point of the pressing stroke, and that then the pressure cushion (11) in the hydraulic member (8) forms, with the liquid store (13), a hydraulic spring capable of yielding by at most 1% against the gas pressure (14).

2. Mechanical press according to claim 1, characterised in that the working pressure in the hydraulic member (8) is capable of being varied (43; 47a, 47b, 47c) with the hydropneumatic pressure-generating and/or maintaining system through the gas pressure (14) being established at the liquid store (13).

3. Mechanical press according to one of the claims 1 and 2, characterised in that the liquid pressure in the hydraulic member (8) can be connected to a computer (47a, 47b, 47c) and it is possible through this latter to determine at (43) the actual related gas pressure (14) which is established at the liquid store (13).

4. Mechanical press according to one of the claims 1 to 3, characterised in that the hydraulic member (8) has associated therewith a plurality of pressure sensors (47a, 47b, 47c) for different effective pressures and such sensors can be connected at will to the computer.

5. Mechanical press according to one of claims 1 to 4, characterised in that the gas pressure in the liquid store (13) is established in a gas vessel (14) and is variable by means of a gas pump (26, 27, 28) which has a connection (29 and 32 to 34) with a pressurised gas bottle (30).

6. Mechanical press according to one of claims 1 to 5, characterised in that the liquid store (13) of the hydropneumatic pressure-generating and/or pressure-maintaining system can be charged by way of a gear-wheel pump (17) and a piston pump (48) with working liquid, the gear-wheel pump (17) being designed for delivery with alteration of the rated pressure and the piston pump (48) for delivery to maintain the rated pressure.

7. Mechanical press according to one of the claims 1 to 6, characterised in that the gas pump (26, 27, 28) consists of a piston-type storage unit (25 to 28) which can be temporarily connected at one side (28) to the gas bottle (30), in the two end positions of which unit can be actuated a limit switch, that both limit switches are associated with a path valve (20) by which the gear-wheel pump (17) can be occasionally brought into delivery connection with the other side (25) of the piston-type storage unit (25 to 28) in order to operate the gas pump (26, 27, 28).

8. Mechanical press according to one of the claims 1 to 7, characterised in that the gas pump (25 to 28) can at will be connected, at (40, 41 or 34, 35) on the gas side (28), either with the pressurised gas bottle (30) or with the gas vessel (14) of the liquid store (13).

## Revendications

1. Presse mécanique (1), notamment presse à genouillère, comportant, entre les organes récepteurs et transmetteur de force (3, 4, 5), comme la genouillère (5), le chariot (4) et la table (3), un organe hydraulique (8) dont la chambre sous pression (9) forme un coussin sous pression (11) qui est continuellement en relation avec un dispositif de génération et/ou maintien de pression hydropneumatique équipé d'un accumulateur de liquide (13) relié au coussin sous pression (11), qui est à son tour maintenu sous pression de gaz (14), la consigne de pression hydraulique de l'accumulateur de liquide (13) étant continuellement imposée par la pression de gaz (14) adaptable à la force de pression requise, caractérisée en ce que le volume de l'accumulateur de liquide (13) du dispositif de génération et/ou de maintien est dimensionné par rapport au volume maximum du coussin sous pression (11) de l'organe hydraulique (8) de telle sorte que la consigne de pression hydraulique imposée par l'accumulateur de liquide (13) est variable au point mort inférieur de la course de la presse, par refluement de liquide hors de l'organe hydraulique (8) et en ce que, dans ce cas, le coussin sous pression (11) de l'organe hydraulique (8) constitue, avec l'accumulateur de liquide (13), un ressort hydraulique s'écartant en alternance de tout au plus 1% de la pression de gaz (14).

2. Presse mécanique selon la revendication 1 caractérisée en ce que la pression de fonctionnement de l'organe hydraulique (8) est variable (43; 47a; 47; 47c) à l'aide du dispositif hydropneumatique de génération et/ou de maintien de pression, via la pression de gaz (14) présente à l'accumulateur de liquide (13).

3. Presse mécanique selon l'une quelconque des revendications 1 et 2 caractérisée en ce que la pression de liquide dans l'organe hydraulique (8) est commandable (47a, 47b, 47c) par un calculateur, qui est apte à imposer (43) la pression de gaz (14) chaque fois correspondante régnant à l'accumulateur de liquide (13).

4. Presse mécanique selon l'une quelconque des revendications 1 à 3 caractérisée en ce que plusieurs sondes de pression (47a, 47b, 47c) pour diverses pressions de fonctionnement sont associées à l'organe hydraulique (8) et en ce que celles-ci sont raccordables, au choix, au calculateur.

5. Presse mécanique selon l'une quelconque des revendications 1 à 4 caractérisée en ce que la pression de gaz de l'accumulateur de liquide (13) est établie dans une bulle de gaz (14) et est variable à l'aide d'une pompe de gaz (26, 27, 28) qui est reliée (29 et 32 à 34) à un réservoir à gaz sous pression (30).

6. Presse mécanique selon l'une quelconque des revendications 1 à 5 caractérisée en ce que l'accumulateur de liquide (13) du dispositif hydropneumatique de génération et/ou de maintien de pression est alimenté en liquide de fonctionnement via une pompe à engrenages (17) et une pompe à piston (48), la pompe à engrenages (17) étant prévue pour l'alimentation en cas de variation de la consigne de pression et la pompe à piston (48) étant prévue pour l'alimentation en vue du maintien de la pression de consigne.

7. Presse mécanique selon l'une quelconque des revendications 1 à 6 caractérisée en ce que la pompe à gaz (26, 27, 28) consiste en un accumulateur à piston (25 à 28) reliable temporairement, d'un côté (28), à un réservoir à gaz (30) et comportant chaque fois un interrupteur de fin de course actionnable dans les deux positions extrêmes, en ce que les deux interrupteurs de fin de course sont associés à un distributeur de pression (20) apte à relier la pompe à engrenages (17) temporairement à l'autre côté (25) de l'accumulateur à piston (25 à 28) en vue du fonctionnement de la pompe à gaz (26, 27, 28).

8. Presse mécanique selon l'une quelconque des revendications 1 à 7 caractérisée en ce que la pompe à gaz (25 à 28) est reliable au choix (40, 41 ou 34, 35), du côté gaz (28), au réservoir à gaz sous pression (30) ou à la bulle à gaz (14) de l'accumulateur de liquide (13).

# Fig. 1

Fig. 2